# EUROPEAN PATENT SPECIFICATION

(11) **EP 2 235 417 B1**
(45) Date of publication and mention of the grant of the patent: **24.10.2018**
(21) Application number: 08864631.0
(22) Date of filing: 19.12.2008
(51) Int. Cl.: F16L 3/24, F16L 3/13, F16B 5/12

(54) **A CLIP DEVICE, A SYSTEM FOR ATTACHMENT OF CONDUITS COMPRISING SAID CLIP DEVICE AS WELL AS A HEAVY VEHICLE COMPRISING SAID CLIP DEVICE**
CLIP-VORRICHTUNG, SYSTEM ZUR BEFESTIGUNG VON LEITUNGEN, DAS DIESE CLIP-VORRICHTUNG UMFASST SOWIE LASTKRAFTWAGEN, DER DIESE CLIP-VORRICHTUNG UMFASST
DISPOSITIF D'ATTACHE, SYSTÈME POUR LA FIXATION DE CONDUITES COMPRENANT LEDIT DISPOSITIF D'ATTACHE ET VÉHICULE LOURD COMPORTANT LEDIT DISPOSITIF D'ATTACHE

(30) Priority: 21.12.2007 WO PCT/SE2007/001167
(43) Date of publication of application: 06.10.2010
(73) Proprietor: Volvo Lastvagnar AB, 405 08 Göteborg (SE)
(72) Inventor: LEVIN, Göran, SE-425 65 Hisings Kärra (SE); BODIN, Jan-Olof, SE-441 65 Alingsås (SE)
(74) Representative: Volvo Technology Corporation
(86) International application number: PCT/SE2008/000731
(87) International publication number: WO 2009/082325

(56) References cited:
- GB-A- 2 122 248
- US-A- 2 657 442
- US-A- 5 148 981
- US-A- 5 308 033
- US-A1- 2006 150 563

## Description

### TECHNICAL FIELD

The invention relates to a clip device for a heavy vehicle and a system for attachment of conduits to a heavy vehicle frame according to the preambles of the independent claims.

### BACKGROUND OF THE INVENTION

In the field of heavy motor vehicles, such as a truck in the form of a rigid or a semi-tractor, it is necessary to arrange bundles of conduits along the frame side of the vehicle. These conduits can be arranged between for example the cabin, the drive unit and the chassis of the vehicle. The conduits can be for example electrical cables for supplying electrical devices with electric current from a battery arranged in the vehicle or for transferring of control signals to different components.

A truck is also usually provided with other types of conduit, such as water tubes, hydraulic hoses and similar, i.e. conduits for liquids which are also necessary in order to provide certain functions in the vehicle. A further type of conduit is conduits for pneumatic components which can be used for example for feeding compressed air to an air suspension system, wheel brakes or any other pneumatic-controlled equipment.

Consequently, there is a need for arranging bundles of conduits of various types at the frame side of the truck. These conduits are to be routed in certain ways in each individual vehicle according to specifications related to the type of equipment which is arranged in the vehicle. However, due to variations which occur in the specifications of each given vehicle, for example regarding the choice of engine and transmission, vehicle dimensions, the number of wheel axles, the design of the driver's cabin etc., a very large number of combinations of equipment will be the result. This implies that it can be many alternatives for routing the bundles between the different associated components in the vehicle. The large number of conduits and the large number of different combinations of conduits are problematic, since the routing and suspension of the bundles require a time-consuming and costly wiring and mounting procedure. Accordingly, the procedure for mounting the conduits will increase the costs of the vehicle.

US-A-5, 308, 033 discloses a clamp for attaching tubes, hoses, wire harnesses and the like to a vehicle frame. The clamp comprises an elongate section of spring steel having a centre portion and a flange engaging end which is bent back outwardly over the body portion to engage a frame rail flange of a vehicle, and also engage the web portion of the frame rail. The other end of the section is folded inwardly to create a structure engaging loop within which the tubes, hoses or harnesses may rest. For convenience in opening the structure engaging loop, a terminal finger loop is provided.

According to a further prior art document, US 2006/0150563 relates to a rail clip for securing a strip heater to a rail that resists removal when subjected to intense vibration.

### SUMMARY OF THE INVENTION

An object of the invention is to provide a clip device for a heavy vehicle of the kind as mentioned in the introduction herein, by which clip device a cost-effective solution for suspension of conduits extending between different units in a heavy vehicle can be obtained. Another object is to provide a system with an improved clip device.

These objects are achieved by a clip device for a heavy vehicle and a system according to the independent claims.

The invention is applicable on heavy vehicles, in particular trucks. The invention is, however, not restricted to trucks, but may also be used for example in wheel loaders, articulated haulers, excavators, and buses.

A clip device is proposed for a heavy duty vehicle, comprising a first leg and a second leg for clamping the device onto a flange of a heavy vehicle frame rail, the clip device being adapted to be retained by means of internal spring force of the clip device when the first leg and the second leg are situated on opposite sides of the flange and abut the flange during influence of said internal spring force, the clip device further comprising a means for suspension of at least one conduit. At least two contact areas spaced apart by a significant distance are provided at the same leg. At least two springs can be arranged in the same leg constituting said contact areas.

A contact force between the clip device and the flange is not allowed to exceed a certain value because otherwise there will be damage to the surface of the flange. Any damage to the varnish of the flange, which in turn can lead to corrosion and other problems, has to be avoided.

By the use of the clip device according to the invention the clip device can be mounted without bolts or making holes in the frame, since the clip device is retained on the flange by the spring force of the clip device itself. The elimination of bolts is also advantageous since it will decrease the weight and assembling costs.

Preferably, the distance can be adapted to limit a torsional movement of the clip device. With conduits attached to the clip device, the clip device experiences a torsion force exerted by the conduits, particularly by e.g. longitudinal movements of the clamped hoses and cables. By providing two contact areas spaced apart by a significant distance adapted to limit the torsional movement of the clip device, the clip device is securely fastened to the flange by the internal spring forces of the clip device counteracting the torsional force. The at least two contact areas enclosing the distance are preferably oriented in a transverse direction with respect to an outer edge of the flange, i.e. one contact area is positioned closer to the outer edge than the other. The at least two contact areas provide a contact to the flange in a mounted state of the clip device.

The clip device can be made of spring steel to obtain and maintain the desired configuration and spring characteristics. The stiffness and the resilient characteristics of the clip device can be achieved by means of the shape and the current material of the clip device. The clip device is preferably made of stainless high-tensile steel, although other materials with similar characteristics can be used.

According to a favourable development of the invention, , one spring providing the first contact area can be formed by a portion of one of the legs and the second contact area can be provided by a spring protruding from the leg. The first contact area can be formed by e.g. a portion of the leg bent in a way to produce a rim which is intended to contact the flange.. The other spring can be formed by e.g. cutting out a tongue and bending it inwards with respect to the clip device.

The leg providing the at least two contact areas is bent to provide an undulated profile thus providing two or more contact points within the leg extension and an outwardly pointing protuberance. In the mounted state of the clip device, the protuberance forms a gap between the leg of the clip device and the flange which gives a clearance for one or more conduits mounted state of the clip forms a gap between the leg of attached to the flange. Advantageously, the clip device allows a flexible positioning even in areas of the frame rail where one or more elements are already attached directly to the flange.
According to a further favourable development of the invention, alternatively or additionally one or more rubber cushions can be attached to one or all legs of the clip device. The one or more rubber cushions are spread apart by a significant distance from each other and/or from one or more springs and can contact the flange at one or more of said contact areas. The significant distance is chosen in a way to reduce torsional movement of the clip device when attached to the frame rail. The one or more rubber cushions can provide similar torsion resistance of the clip device as one or more springs. Moreover, the flange can be protected against scratches caused by the clip device.

According to a favourable development of the invention, at least one spring can be provided on at least one leg in combination with a force dividing element. The force dividing element can provide at least two contact areas spread apart for exerting a contact force device on the flange in a mounted state of the clip device. A sufficient contact force can be provided irrespective of small variations in the frame thickness. Particularly, the force dividing mechanism can be provided by a yoke. The spring contacts the yoke in a middle portion of the yoke preferably in a torsional stiff manner. The yoke can be arranged extending in a direction transverse with respect to an outer edge of the flange. Alternatively, the yoke can be arranged extending in a direction longitudinal with respect to the outer edge of the flange.

According to a favourable development of the invention, the leg provided for an inner surface of the flange can have a significant distance to the web. Favourably, in the clearance between the web and the leg conduits, bolts or other installations can be provided additionally to the conduits fixed by the clip device.

According to a favourable development of the invention, the second leg can have a free end portion with an extension in a direction substantially in parallel to the main extension direction of the first leg, said second leg end portion pointing in the same direction to the first leg.

According to a favourable development of the invention, the second leg can have a free end portion with an extension in a direction substantially in perpendicular to the main extension direction of the first leg, said second leg end portion pointing away from the first leg.

According to a favourable development of the invention, the second leg can have a free end portion with an extension in a direction substantially in parallel to the main extension direction of the first leg, said second leg end portion pointing in opposite direction to the first leg.

It is possible to provide a clip device with more than one end portion of the second leg. Particularly, the end portions can point in different directions, by way of example one end portion directing substantially in perpendicular to the main extension direction of the first leg and/or one end portion with an extension direction substantially in parallel to the main extension direction of the first leg, the end portion pointing in the same direction to the first leg, and/or one end portion with an extension in a direction substantially in parallel to the main extension direction of the first leg, the end portion pointing in opposite direction to the first leg.

By the provision of a clip device for a heavy vehicle, which clip device has a first leg and a second leg for clamping the device onto a flange of a heavy vehicle frame rail, and the clip device is adapted to be retained by means of internal spring force of the clip device when the first and second legs are situated on opposite sides of the flange and abut the flange during influence of said internal spring force, wherein the clip device further comprises a means for suspension of at least one conduit, and the first leg has a means for engagement with a transition zone between the flange and a further portion of the heavy vehicle frame rail, the procedure for mounting conduits to the frame of a vehicle can be simplified.

In addition, the engagement means for engagement with the transition zone between the flange and a further portion, preferably a web of the frame rail implies that the spring force of the clip device can be decreased compared to other already known clip devices, since the engagement between the clip device and the flange will also contribute to retain the clip device in desired position on the flange. This is important because too high spring force would make it more difficult to arrange the clip device on the flange. Furthermore, the contact force between the clip device and the flange is not allowed to exceed a certain value because otherwise there will be damage to the surface of the flange. Any damage to the varnish of the flange, which in turn can lead to corrosion and other problems, has to be avoided.

According to another aspect of the invention a system for attachment of conduits to a heavy vehicle frame is provided.

The system comprises a heavy vehicle frame rail having a web and a flange, and a clip device according to the invention, wherein the clip device is adapted to be arranged on the flange such that substantially the entire first leg is situated on the flange side of a geometrical plane defined by the main extension of an outer surface of the web. This implies that the clip device can be positioned in any position along the rail and moved along the rail to a desired position without interfering with other components arranged on the outside of the web.

Usually a heavy vehicle frame rail is a U-beam arranged such that the flanges are directed inwardly and the outer surface of the vertical web forms the outer lateral limiting surface of the current frame side. Since there are many components to be arranged on the outside of the frame side of a truck, a clip device which occupies space at the outside of the web, i.e. extends beyond the geometrical plane defined by the web surface, can only be arranged at certain predetermined positions which are free from other components.

The system according to the invention makes the routing of conduits more flexible because the conduits or cables can be prepared in bundles with cable ties or tie wraps and coupling means for connection to the clip devices. This can for example be accomplished by the sub-supplier of conduits. Thereafter, the bundle of conduits can be coupled to a number of clip devices and finally the clip devices provided with the conduits are clamped on the flange. In this way, the position of each clip device is determined by the current conduit bundle rather than by any free space available on the frame side because the clip device according to the invention will not interfere with other components and can be arranged in any desired position along the frame rail.

The invention also relates to a heavy vehicle comprising a clip device and/or system according to the invention.
Further advantages and advantageous features of the invention are disclosed in the following description and in the dependent claims.

### BRIEF DESCRIPTION OF THE DRAWINGS

With reference to the appended drawings, below follows a more detailed description of examples useful for understanding the invention and embodiments of the invention, wherein the drawings show
- Fig. 1a-1d: a side view of a first example of a clip device (Fig. 1a), a top view of a holder which is attachable to the clip device for holding one or more conduits (Fig. 1b); a perspective top view on the clip device (Fig. 1c), and a side view of an arrangement of the clip device on a flange (Fig. 1d);
- Fig. 2a, 2b: a perspective view of an embodiment of a clip device according to the invention (Fig. 2a) and an alternative spring arrangement (Fig. 2b);
- Fig. 3a-3d: a perspective view of a further example of a clip device arranged on a flange of a heavy vehicle frame rail(Fig. 3a), a view corresponding to Fig. 3a where the conduits have been attached to the clip device by means of a snap coupling (Fig. 3a), a perspective view of an alternative example of the clip device (Fig. 3c), and a perspective view of an alternative example of the clip device (Fig. 3d) with two crosswise oriented portions for attachment of one or more conduits;
- Fig. 4a, 4b: a cross section view of the clip device and the heavy vehicle frame rail in Fig. 3a-3c (Fig. 4a), and an enlarged view of the transition zone between the flange and a web of the heavy vehicle frame rail (Fig. 4b), and
- Fig. 5: a preferred heavy duty vehicle provided with clip devices according to the invention.

### DETAILED DESCRIPTION OF PREFERRED EMBODIMENTS OF THE INVENTION

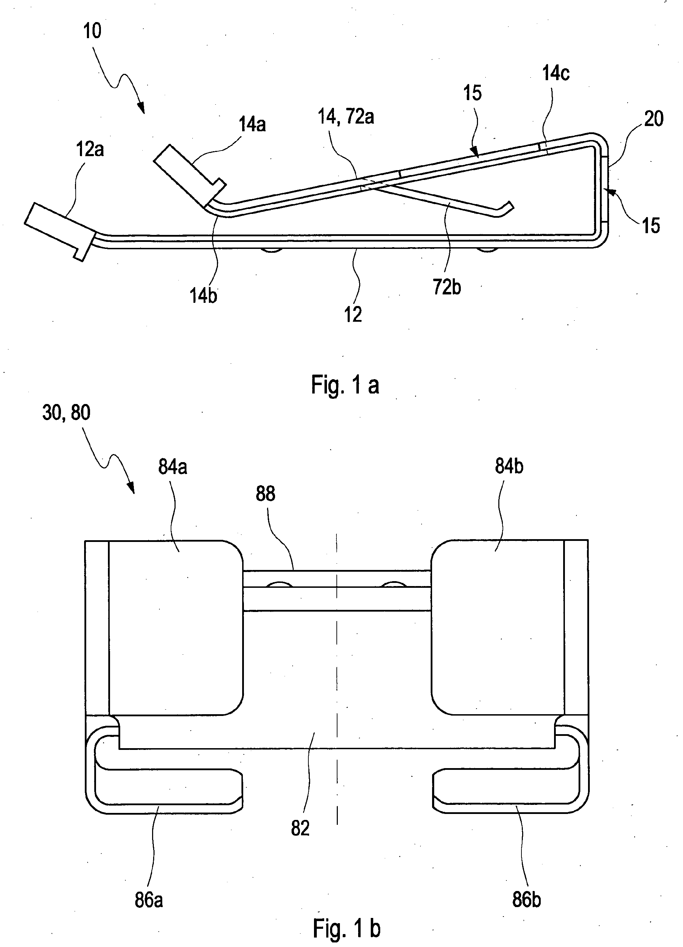

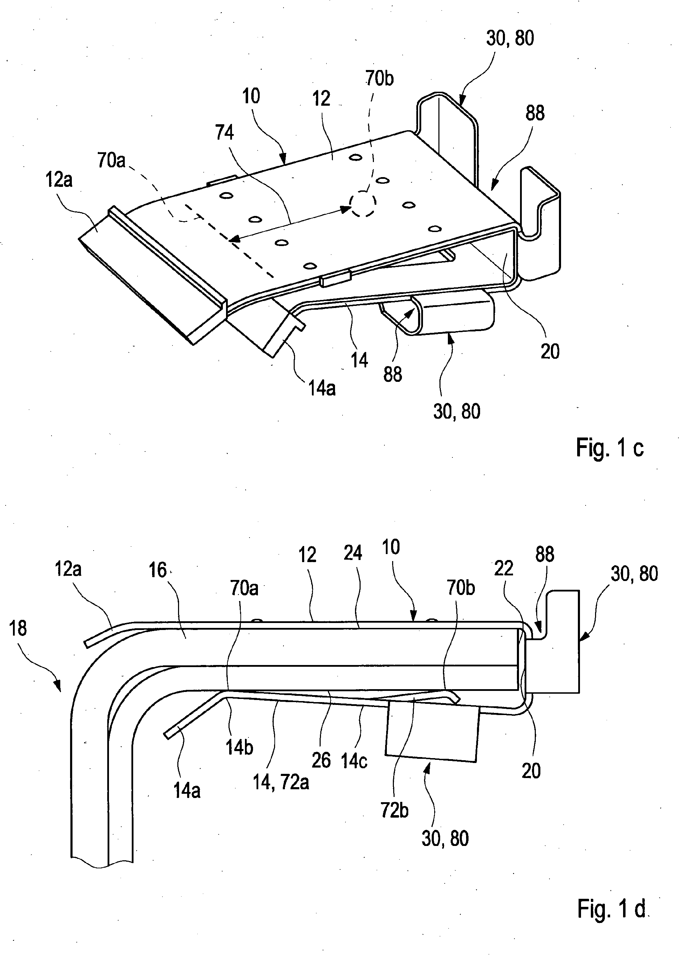

Fig. 1a shows a side view of an example embodiment of a clip device 10. Fig. 1b shows a top view of a holder 80 which is attachable to the clip device 10 for holding one or more conduits. Fig. 1c depicts a perspective top view of the clip device and Fig. 1d shows a cut through an arrangement of the clip device 10 mounted on a flange 16 of a heavy vehicle frame rail 18.
Although a lot of examples of conduits used on trucks already are mentioned herein, it is stressed that the expression "conduit" is meant to comprise different kind of pipes and hoses for liquid as well as gas or gas mixtures, and cables and electrical wires for providing energy or transferring control signals to different components. Furthermore, one single clip device 10 can be used for suspension of one or more conduits, and preferably for suspension of several conduits arranged in a bundle.

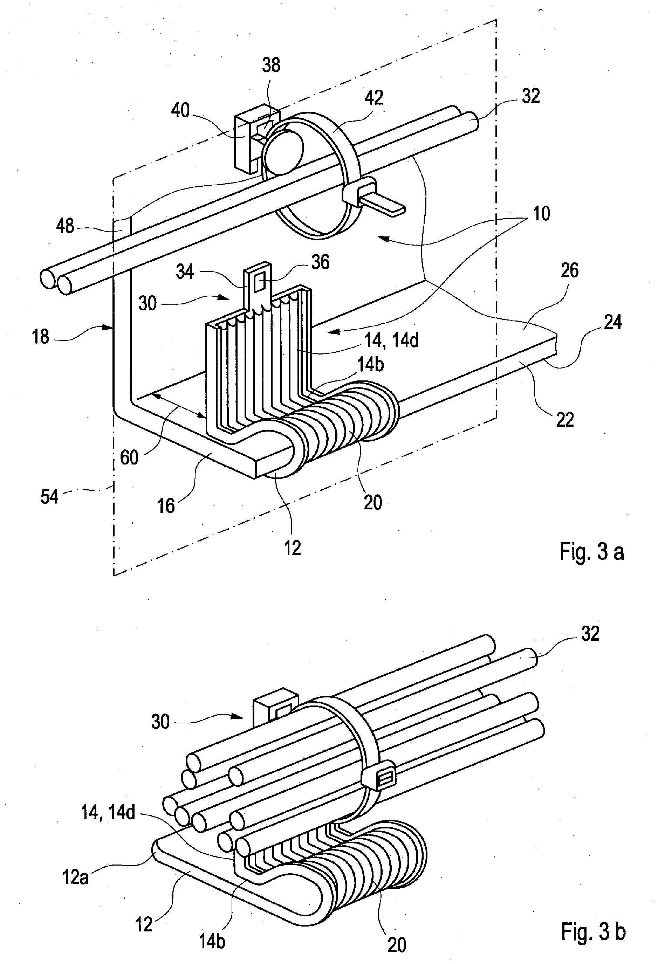

Referring now to Figs. 1a-1d, the clip device 10 comprises a first leg 12 and a second leg 14 for clamping the device 10 onto a flange 16 (Fig. 1d) of a heavy vehicle frame rail 18, the clip device 10 being adapted to be retained by means of internal spring force of the clip device 10 when the first leg 12 and the second leg 14 are situated on opposite sides 24, 26 (Fig. 1d) of the flange 16 and at least partially abut the flange 16 during influence of said internal spring force, the clip device 10 further comprising a element 30 for suspension of at least one conduit 32 (Fig. 3a-3d). The internal spring force can be achieved by means of the first leg 12 and/or the second leg 14 and/or any portion 20 which connects the first leg 12 and the second leg 14 to each other. The clip device 10 can be designed with a gap between the first leg 12 and the second leg 14 when the clip device 10 is in an unloaded condition or without a gap which implies that the first leg 12 and the second leg 20 has a contact point in an unloaded condition. The distance between the first and second legs 12, 14 is preferably adapted to the thickness of the flange 16.

The first leg 12 ends in an end portion 12a, the second leg 14 ends in an end portion 14a. Both end portions 12a, 14a are angled and direct in the same direction. A projection of the second leg 14 on the first leg 12 is shorter than the first leg 12, so that the first leg 12 can engage with a transition zone 46 (Fig. 1d) of the frame rail 18 with its end portion 12a. At the end portions 12a, 14a, a cover can be arranged for protecting the outer edges of the end portions 12a, 14a.

The first leg 12 and the second leg 14 are connected by an intermediate portion 20 building a transition zone between the first leg 12 and the second leg 14. The intermediate portion 20 can be straight or curved. At the straight intermediate portion 20 a holder 80 as the element 30 for suspension of at least one conduit 32 (Fig. 3a-3d) can be attached in a way that a pocket 88 can be formed in which a component like a component 40 for attaching one or more conduits 32 (Figs. 3a and 3b) can easily slide in.

At least two contact areas 70a, 70b (Fig. 1c) spaced apart by a significant distance 74 are provided at the same leg 12, 14 at an interface region where the leg 12, 14 contacts the flange 16, which by way of example can be the leg 14 abutting the inside 26 of the flange 16 in contact areas 70a, 70b proximal to the outer edge 22 of the flange 16. Generally, such contact areas 70a, 70b can be arranged in one or both legs 12, 14.

By way of example, the first contact area 70a is formed by the contact region of the second leg 14 and the flange 16. The contact area 70a can be as broad as the second leg 14 yielding a stable support. The second leg 14 extends from the intermediate portion 20 to its end portion 14a which is angled to the main extension of the second leg 14. The leg 14 forms a leaf spring 72a which provides a kink as a transition zone 14b between the main portion 14c and the end portion 14a to contact the flange 16 at its inner side 26.

The second contact area 70b is formed by a second spring leaf 72b, which by way of example is directing in the opposite direction of the end portion 14a towards the outer edge 22 of the flange 16. The second leaf spring 72b can be cut out from the main body 14b of the second leg 14. However, the second leaf spring 72b can also be attached to the leg 14.

In the first embodiment, the distance 74 is provided between the contact areas 70a, 70b of the two leaf springs 72a, 72b, i.e. between the transition zone 14b of the second leg 14 and the leaf spring 72b projecting from the second leg 14 towards the same side as the transition zone 14c of the second leg 14.

The contact areas 70a, 70b spaced apart by the distance 74 of the springs 72a, 72b are oriented along the longitudinal extension of the clip device 10 which is parallel to the paper plane of Fig. 1d.

In the current example embodiment, two holders 80 are attached to the clip device 10, one at the intermediate portion 20 between the first leg 12 and the other the second leg 14 and at the second leg 14. Thus, conduits 32 can be positioned for instance at the outer edge 22 of the flange 16 and at the inside 26 of the flange 16. Of course, there can be more or less of those holders 80 attached to the clip device 10 as well as one or more conduits 32 (Fig. 3a) can be attached with different means to the clip device 10.

The distance 74 between the two leaf springs 72a, 72b is adapted to limit a torsional movement of the clip device 10 and can be easily adapted to an overall geometry of the clip device 10. A torsional movement of the clip device 10 can be exerted by the conduits 32 (Fig. 3a) on the clip device 10 which are more or less rigid. A longitudinal movement of the conduits 32 may for instance cause a torsional movement of the clip device 10.
Fig. 1b depicts in detail an example embodiment of an element 30 for suspension of at least one conduit 32 (Fig. 3a-3d). The element 30 is embodied as a holder 80 which can be attached to the clip device 10. A left and a right wing 84a, 84b partially overlap with a base portion 82 forming a pocket 88. Two fingerlike portions 86a, 86b, a left portion 86a and a right portion 86b, can be attached to the predefined areas 15 of the clip device 10. By way of example, the holder 80 can be welded to the clip device 10. Into the pocket 88 a corresponding mating element can be inserted which can carry a multitude of conduits 32. The mating element can be similar to element 40 in Fig. 3a, and can be employed with or without snap-in function.
In a further embodiment (not shown) similar to Fig. 1c, the leg 14 can be bent in a way that a yoke-like form is generated, with the yoke-like form extending in a longitudinal direction with respect to the outer edge 22 of the flange 16 with two contact points at the end instead of a laminar contact area 70a. Instead of two different springs 72a, 72b, the leg 14 now has two different spring functions formed by bending the leg 14 appropriately. The leaf spring function (i.e. bending the leg 14 in the plane of the paper forming the transition zone 14b) will produce the sum of the force. Bending the leg 14 additionally in a yoke-like form can be used to split the contact force between the two contact points 70a. In case the torsional stiffness along an axis in the plane of the paper is low, the contact force will be well divided between the contact points 70a.

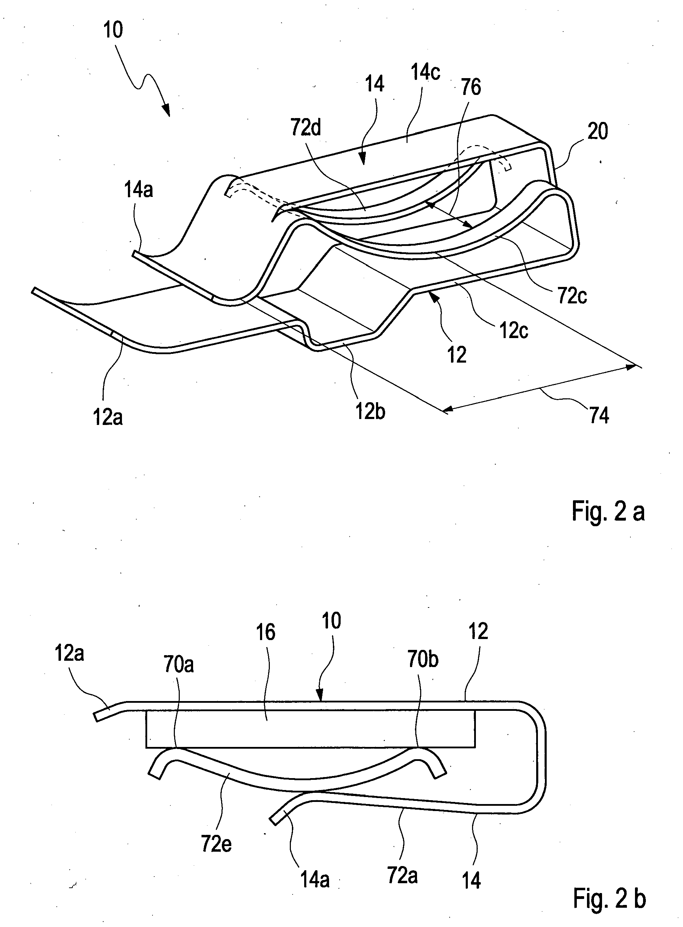

Fig. 2a shows a perspective view of an embodiment of a clip device 10 according to the invention.

The clip device 10 provides two springs 72c, 72d, one at each side of the main portion 14c of the leg 14. The springs 72c, 72d can be generated by incisions forming stripes at both sides of the main portion 14c and bending of the stripes inwardly. The two middle portions of the springs 72c, 72d will form contact areas with the flange 16, spread apart with a distance 76, the contact areas spread apart from the contact area 72a of transition zone 14c of the second leg 14.

The first leg 12 can provide a bended portion 12b in a main portion 12c forming a protuberance which is projecting outwardly of the clip device 10. When the clip device 10 is attached to the flange 16, the protuberance is a gap for one or more conduits, bolts or the like (not shown) arranged on the flange 16.

An alternative spring arrangement comprising a yoke 72c as a force dividing element is illustrated in Fig. 2b, wherein a leaf spring 72a formed by the leg 14 engages a springlike yoke 72e in a middle portion, preferably in a torsionally stiff manner. The yoke 72e divides a compression force exerted by the spring 72a on the yoke 72e to its end portions. The preferably rounded end portions of the yoke 72e provide two contact areas 70a, 70b on the flange 16 transverse to an outer edge of the flange 16. The yoke 72e divides the force produced by the leaf spring action of the leg 14 on two contact areas 70a, 70b spread apart. The connection between the yoke 72e and the leg 14 is torsionally locked around an axis in the plane of the paper.

The spring 72a can be the leg 14, e.g. the transition zone 14b as described in Fig. 1a-1c, or another spring coupled to the second leg 14. Alternatively, the spring action can be provided by springs 72c, 72d described in Fig. 2a.

Again, in the embodiments of Fig. 2a, 2b, the transition zone 14b can be even to form a laminar contact area 70a or bended to form two or more contact points.

Additionally or alternatively, according to an embodiment not depicted in the drawing one or more flexible cushions, particularly rubber cushions, can be attached to the leg 14 to replace one or more or all springs 72a, 72b, 72c, 72d, 72e. The one or more rubber cushions are spread apart at a distance big enough so that the clip device 10 is sufficiently stable against torsional movements of the conduits attached to the clip device 10. A skilled person can easily chose a sufficient distance 74 between the contact areas 70a, 70b of the springs 72a, 72b, 72c, 72d, 72e and/or cushions depending on the actual size and thickness of the clip device 10.

In for example Figs. 3a to 3d another preferred clip device 10 for suspension of at least one conduit 32, and a system for attachment of conduits 32 to a heavy vehicle frame 18 are illustrated. Springs and/or spring functions as described in the preceding embodiments can be provided in the clip device 10, but are not explicitly shown.

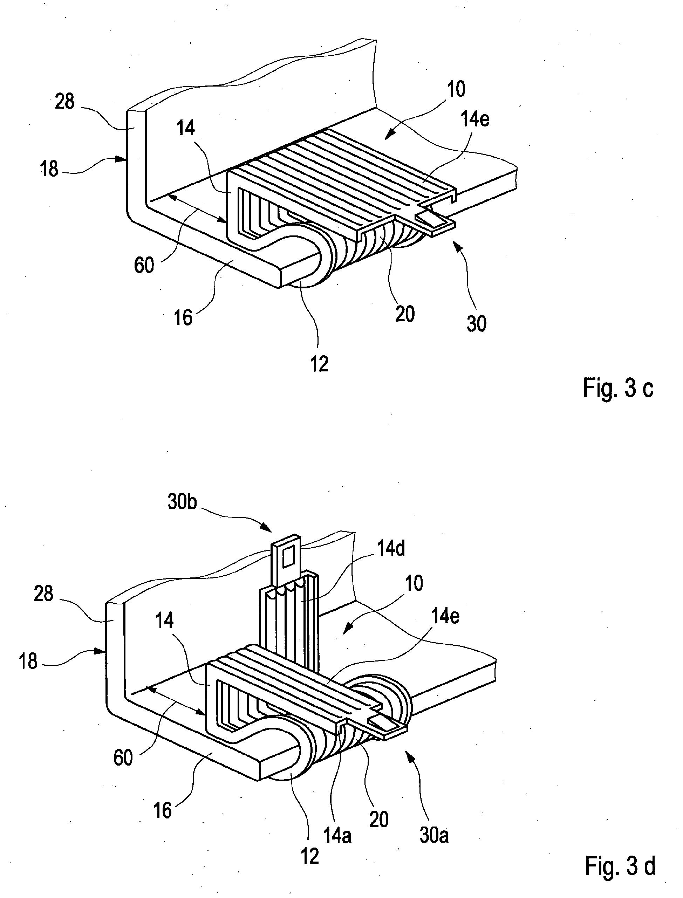

The clip device 10 comprises a first leg 12 and a second leg 14 for clamping the clip device 10 onto a flange 16 of a heavy vehicle frame rail 18. The device 10 is retained at the flange 16 by means of internal or inherent spring force of the device 10. The first leg 12 and the second leg 14 are situated on opposite sides 24, 26 of the flange 16, and the first leg 12 and the second leg 14 abut the flange 16 during influence of said internal spring force of the clip device 10. The first and second legs 12, 14 are connected to each other, preferably by a intermediate portion 20 to be situated at the outer edge 22 of the flange 16 when the clip device 10 is installed on the flange 16. The internal spring force can be achieved by means of the first leg 12 and/or the second leg 14 and/or any portion 20 which connects the first leg 12 and the second leg 14 to each other. Accordingly, if the first leg 12 and the second leg 14 are moved away from each other, i.e. are bent in opposite directions, the internal spring force acts to counteract such a movement. As in the embodiments described above, the clip device 10 can be designed with a gap between the first leg 12 and the second leg 14 when the clip device 10 is in an unloaded condition or without a gap which implies that the first leg 12 and the second leg 20 has a contact point in an unloaded condition. The distance between the first and second legs 12, 14 is preferably adapted to the thickness of the flange 16.
The clip device 10 can be made of spring steel to obtain and maintain the desired configuration and spring characteristics. The stiffness and the resilient characteristics of the clip device 10 can be achieved by means of the shape and the current material of the clip device 10. The clip device 10 is preferably made of stainless high-tensile steel, although other materials with similar characteristics can be used. For example, in some applications the clip device 10 could be made by carbon fibre reinforced plastics. Thus, there is no need of any bolts or similar external means for clamping the clip device 10 on the flange 16.
The first leg 12 is intended to be arranged at the outside 24 of the flange 16 and the second leg 14 is intended to be arranged at the inside 26 of the flange 16. The second leg 14 can have a free end portion 14d with an extension in a direction substantially in perpendicular to the main extension direction of the first leg 12, where the second leg end portion 14d points away from the first leg 12, as illustrated in Figs. 3a and 3b. In another embodiment the second leg 14 has a free end portion 14e with an extension in a direction substantially in parallel to the main extension direction of the first leg 12, where the second leg end portion 14e points in opposite direction to the first leg 12, as illustrated in Fig. 3c.
The shape and size of the second leg 14 can be adapted to the current free space inside the rail 18 which in turn can be dependent on the frame type and/or components arranged on the inside of the frame rail. Particularly, the dimension of the second leg 14 projecting from the outer edge 22 of the flange 16 towards the web 28 of the frame rail 18 can be chosen in a way that a distance 60 is kept between the second step 14 and the web 28, thus providing a free installation space between the second leg 14 and the web 28. Thus, the clip device 10 can be mounted on a frame rail 18 which has conduits, bolts, installations and the like already arranged at the inner side of the web 28 in a convenient manner.

The clip device 10 comprises an element 30 for suspension of at least one conduit 32. The suspension element 30 is preferably situated at the second leg 14 as illustrated in the figures. The suspension element 30 preferably comprises a component 34 having a first part 36 of a coupling in the form of a snap-in member for connection to a corresponding second part 38 of the coupling. The suspension element 30 comprises said second part 38 of the coupling, said second part 38 of the coupling being arranged on a component 40 provided with a tie wrap 42 for receiving said at least one conduit 32.The second part 38 of the coupling is arranged on a further component 40 provided with a tie wrap 42 for receiving said at least one conduit 32. Although such a snap-in coupling means is described herein, also other suspension elements can be used. For example, the second leg end portion 14d, 14e can provided with a certain shape and/or an aperture or recess for receiving a tie wrap 42 in order to attach the conduit 32 or conduits 32 directly to the second leg end portion 14d, 14e. An end portion 14a according to the embodiments in Figs. 1a, 1c, 1d and Fig. 2a can also be embodied likewise.

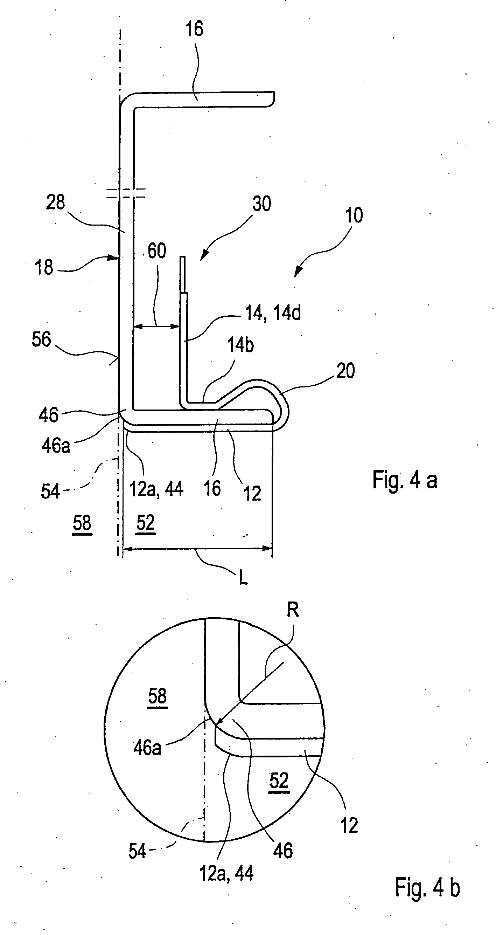

In another embodiment of the clip device 10 the device 10 is provided with two second leg end portions 14d, 14e. For example, the second leg 14 could be split into two second leg end portions 14d, 14e (Fig. 3d). This implies that such a device 10 is a combination of the embodiments in Figs. 3a and 3c. In this case each second leg end portion 14d, 14e has an attachment point for receiving conduits 32. The upright second leg end portion 14d (corresponding to Fig. 3a) can be provided with a snap coupling element as illustrated in Fig. 3a and the horizontal second leg end portion 14e (corresponding to Fig. 3c) can be provided with an aperture for receiving a tie wrap 42 and attachment of conduits 32 directly to the second leg end portion 14e.
As can be seen from Fig. 4a, in accordance with the invention the first leg 12 has an engagement means 44 for engagement with a transition zone 46 between the flange 16 and a further portion 28 (web 28) of the heavy vehicle frame rail 18. The flange 16 and the further portion 28 extend in different directions. The transition zone 46 is the zone where the flange 16 changes into said further portion 28 and vice versa. In the illustrated embodiment, said further portion 28 is the web 28 of the heavy vehicle frame rail 18, and the engagement means 44 is adapted for engagement with the transition zone 46 between the flange 16 and the web 28. The flange 16 and the web 28 are preferably angled 90° relative to each other and the transition zone 46 exhibits a radius 46a caused by bending the frame rail 18 to form the flange 16 and the web 48. The engagement means 44 counteracts movement of the clip device 10 away from the frame rail 18 in the flange direction. Thereby the clip device 10 is retained on the flange by a combination of the internal spring force and the engagement between the device and the transition zone of the frame rail 18.

Since the transition zone 46 usually is a curved portion having a certain radius R the engagement means 44 comprises a curved portion of the first leg 12 adapted to engage the corresponding curved portion of the transition zone 46. Accordingly, the curved portion of the first leg 12 has preferably an inner radius R adapted to engage an outer radius 46a of the transition zone 46. This inner radius R is preferably approximately of the same size as the outer radius 46a of the transition zone 46. The engagement means 44 is preferably arranged in a free end portion 12a of the first leg 12. Preferably, the engagement means 44 covers not more than 75% of the transition zone 46, which is a very stable arrangement with respect to torsional movement of the clip device 10.

In order to increase the friction between the clip device 10 and the frame rail 18 an additional material layer can be arranged between the clip device 10 and the frame rail 18. For example, a relatively thin rubber layer (not shown) can be arranged between the first leg 12 and/or the second leg 14 and the frame rail 18 so as to increase the friction and provide protection against corrosion. The rubber layer is preferably vulcanized on the clip device 10, on the first leg 12 for instance, although rubber or other materials could be arranged by alternative methods. Plastic layers or tapes arranged by means of an adhesive are also possible solutions. In addition granules which can increase the friction can be contained in a tape to be arranged on the clip device 10. Of course such an additional layer of material can also be arranged on the frame rail 18 if desired. Favourably, the rubber covered contact has a reasonable size to limit the contact pressure exerted on the rubber thus facilitating the arrangement of a clip device 10 having two spaced apart contact points on the flange 16.

As an alternative or in combination with an additional layer of material, at least a portion of a surface of the first leg 12 can be subjected to a surface treatment to increase the friction coefficient thereof. The first leg 12 of the clip device 10 can be roughened by means of blasting or any similar method, by chemical treatment, etc.

In for example Figs. 3a, 4a and 4b, a system for attachment of conduits 32 to a heavy vehicle frame 18 is also illustrated. The system comprises a heavy vehicle frame rail 18 in the form of a U-beam having a vertical web 28 and two laterally directed flanges 16. The clip device 10 can be arranged on the lower flange 16 such that substantially the entire first leg 12 is situated on the flange side 52 of a geometrical plane 54 which plane 54 is defined by the main extension of an outer surface 56 of the web 28. In order to facilitate the mounting of the clip device 10 on the flange 16 and/or secure that substantially the entire first leg 12 is situated on the flange side 52 of said geometrical plane 54, and not on the other side 58 thereof, the effective length L of the first leg 12 of the clip device 10 can be adapted to the length of the flange 16. In other words, the size and/or shape of the clip device 10 can be chosen such that the desired position of the clip device 10 can be reached more or less automatically when the clip device 10 is pushed onto the flange 16 into its most inserted position. The shape of the first leg 12 of the clip device 10 can also be adapted to the shape of the flange 16 whereby it is possible to feel when the clip device 10 is in the intended position and to secure that the first leg 12 is kept on the flange side 52 of said geometrical plane 54. Usually the geometrical plane 54 is substantially vertical when the plane 54 is defined by the web 28 which normally is arranged vertical when the heavy vehicle frame rail 18 is installed in a heavy vehicle.

The shape of the first leg 12 can be adapted to the shape of the frame rail 18 such that along a major part of the length L of the first leg 12, the first leg 12 is in contact with the frame rail 18 when the clip device 10 is installed on the frame rail 18. In addition to the fact that if the first leg 12 follows the outer surface 56 of the flange 16 this enables a relatively compact solution, such an embodiment can also contribute to an increased friction between the flange 16 and the clip device 10. Furthermore, a major part of the surface of the first leg 12 faced toward the frame rail 18 is preferably in contact with the frame rail 18 when the clip device 10 is installed on the frame rail 18.

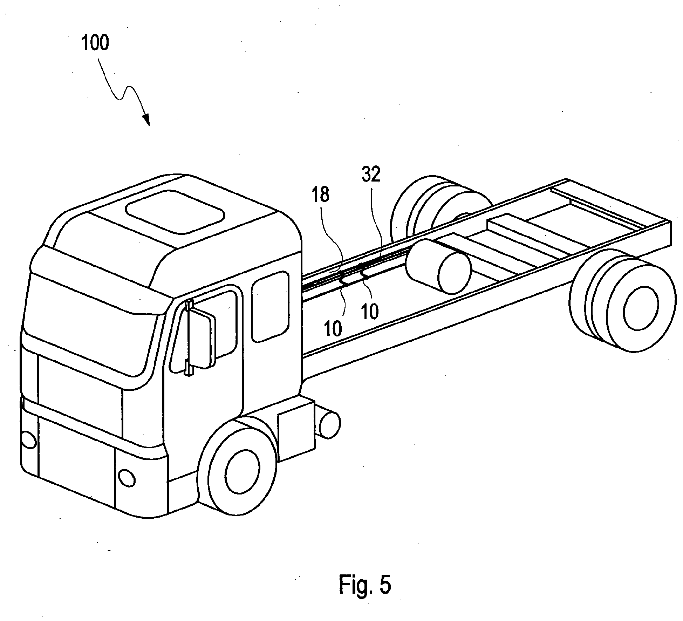

In Fig. 5 a heavy vehicle 100 provided with clip devices 10 arranged on a frame rail 18 is illustrated. Conduits 32 are suspended by means of the clip devices 10.

It is stressed that all embodiments and features described with reference to the clip device 10 herein can be used in the system according to the invention, and any embodiment or feature of the clip device 10 described in context of the system is also applicable on the clip device 10 according to the invention.

It is to be understood that the present invention is not limited to the embodiments described above and illustrated in the drawings; rather, the skilled person will recognize that many changes and modifications may be made within the scope of the appended claims. For example, if the frame is provided with an inner liner which implies that an additional frame rail is arranged inside the main frame rail, the gap between the first leg and the second leg and/or the spring force characteristics of the clip device 10 can be modified in order to enabling clamping of the clip device 10 over two flanges instead of one flange.

## Claims

1. A clip device (10) for connecting one or more conduits to a frame rail (18) of heavy duty vehicle (100), comprising a first leg (12) and a second leg (14) for clamping the device onto a flange (16) of a heavy vehicle frame rail (18), the clip device (10) being adapted to be retained by means of internal spring force of the clip device (10) when the first leg (12) and the second leg (14) are situated on opposite sides (24, 26) of the flange (16) and abut the flange (16) during influence of said internal spring force, the clip device (10) further comprising a means (30) for suspension of at least one conduit (32), wherein between the flange (16) and at least one of the legs (12, 14) at least a first and a second contact area (70a, 70b) spaced apart by a significant distance (74) are provided at the same leg (12, 14) when the first leg (12) and the second leg (14) are situated on opposite sides (24, 26) of the flange (16), **characterized in that** the leg providing the at least two contact areas is bent to provide an outwardly pointing protuberance between the contact areas such as to form a clearance for a conduit when the clip device (10) is connected to the flange (16).

2. A device according to claim 1, **characterized in that** the distance (74, 76) is adapted to limit a torsional movement of the clip device (10).

3. A device according to claim 1 or 2, **characterized in that** the contact areas (70a, 70b) are provided spaced apart in a transverse direction and/or in a longitudinal direction with respect to an outer edge (22) of the flange (16).

4. A device according to any preceding claim, **characterized in that** a first spring (72a) providing the first contact area (70a) is formed by one of the legs (12, 14) and the second contact area (70b) is provided by a second spring (72b, 72c, 72d), wherein preferably the second spring (72b, 72c, 72d) is formed in the respective leg (12, 14).

5. A device according to any preceding claim, **characterized in that** the second leg end portion (14a, 14d, 14e) is provided with a shape and/or an aperture or recess for receiving a tie wrap (42) for directly attaching at least one conduit (32) to the clip device (10).

6. A device according to any preceding claim, **characterized in that** at least one spring (72, 72a, 72b, 72c, 72d) is provided in combination with a force dividing element (72e) providing two contact areas (70a, 70b) spread apart for ascertaining a contact force on the flange (16).

7. A device according to claim 6, **characterized in that** the contact areas (70c, 70d) of the force dividing element (72e) are oriented in a transverse direction with respect to an outer edge (22) of the flange (16) or that the contact areas (70c, 70d) of the force dividing element (72e) are oriented in a longitudinal direction with respect to an outer edge (22) of the flange (16).

8. A device according to any preceding claim, **characterized in that** at least one contact area is provided by a flexible cushion attached to the leg (12, 14), preferably a rubber cushion.

9. A device according to any preceding claim, **characterized in that** the leg (14) provided for an inner surface (26) of the flange (16) is arranged in a distance (60) to the web (28).

10. A device according to any preceding claim, **characterized in that** the first leg (12) has a means (44) for engagement with a transition zone (46) between the flange (16) and a further portion (28) of the heavy vehicle frame rail (18), wherein preferably said engagement means (44) is adapted for engagement with the transition zone (46) between the flange (16) and said further portion being a web (28) of the heavy vehicle frame rail (18) and/or
- that the means (44) for engagement with a transition zone (46) covers not more than 75% of the transition zone (46) and/or
- that said engagement means (44) comprises a curved portion (12a) of the first leg (12) adapted to engage a corresponding curved portion of the transition zone (46) and/or
- that said engagement means (44) is arranged in a free end portion (12a) of the first leg (12).

11. A device according to any preceding claim, **characterized in that** at least a portion of a surface of the first leg (12) has been subjected to a surface treatment to increase the friction coefficient thereof for increasing the friction between the first leg (12) and the flange (16), preferably by roughening said surface and/or
- that the device (10) is comprising a layer of material arranged on the first leg (12) for increasing the friction between the first leg (12) and the flange (16), preferably a layer of rubber or plastic.

12. A device according to any preceding claim, **characterized in that** (A) the second leg (14) has a free end portion (14a) with an extension in a direction substantially in parallel to the main extension direction of the first leg (12), said second leg end portion (14a) pointing in the same direction to the first leg (12) and/or
- that the second leg (14) has a free end portion (14d) with an extension in a direction substantially in perpendicular to the main extension direction of the first leg (12), said second leg end portion (14d) pointing away from the first leg (12) and/or
- that the second leg (14) has a free end portion (14e) with an extension in a direction substantially in parallel to the main extension direction of the first leg (12), said second leg end portion (14e) pointing in opposite direction to the first leg (12) and/or
- that (B) the suspension element (30) comprises a component (34) having a first part (36) of a coupling in the form of a snap-in member for connection to a corresponding second part (38) of a coupling, preferably that the suspension element (30) comprises said second part (38) of the coupling, said second part (38) of the coupling being arranged on a component (40) provided with a tie wrap (42) for receiving said at least one conduit (32).

13. A system for attachment of conduits (32) to a heavy vehicle frame (18), comprising a heavy vehicle frame rail (18) having a web (28) and a flange (16), and a clip device (10) according to any of claims 1-12, wherein the clip device (10) is adapted to be arranged on the flange (16) such that substantially the entire first leg (12) is situated on the flange side (52) of a geometrical plane (54) defined by the main extension of an outer surface (56) of the web (28).

14. A system according to claim 13, wherein (C) the effective length (L) of the first leg (12) of the clip device (10) is adapted to the length of the flange (16) so as to secure that the first leg (12) is situated on the flange side (52) of said geometrical plane (54) and/or
(D) the shape of the first leg (12) of the clip device (10) is adapted to the shape of the flange (16) so as to secure that the first leg (12) is situated on the flange side (52) of said geometrical plane (54) and/or
(E) the geometrical plane (54) is intended to be substantially vertical when the heavy vehicle frame rail (18) is installed in a heavy vehicle (30) and/or
(F) that the shape of the first leg (12) is adapted to the shape of the frame rail (18) such that along a major part of the length (L) of the first leg (12), the first leg (12) is in contact with the frame rail (18) when the clip device (10) is installed on the frame rail (18) and/or
(G) that a major part of the surface of the first leg (12) faced toward the frame rail (18) is in contact with the frame rail (18) when the clip device (10) is installed on the frame rail (18) and/or
(H) that the system comprises a layer of material arranged between the first leg (12) and the flange (16) for increasing the friction between the heavy vehicle frame rail (18) and the clip device (10).

15. A heavy vehicle (100) comprising a clip device (10) according to any of claims 1-12.

## Patentansprüche

1. Clip-Vorrichtung (10) zum Verbinden einer oder mehrerer Leitungen mit einer Rahmenschiene (18) eines Schwerlastfahrzeugs (100), umfassend einen ersten Schenkel (12) und einen zweiten Schenkel (14) zum Klemmen der Vorrichtung an einen Flansch (16) einer Schwerfahrzeugrahmenschiene (18), wobei die Clip-Vorrichtung (10) daran angepasst ist, mittels einer internen Federkraft der Clip-Vorrichtung (10) festgehalten zu werden, wenn sich der erste Schenkel (12) und der zweite Schenkel (14) an gegenüberliegenden Seiten (24, 26) des Flansches (16) befinden und unter dem Einfluss der internen Federkraft an dem Flansch (16) anliegen, wobei die Clip-Vorrichtung (10) ferner eine Einrichtung (30) zur Aufhängung von wenigstens einer Leitung (32) umfasst, wobei zwischen dem Flansch (16) und wenigstens einem der Schenkel (12, 14) wenigstens ein erster und ein zweiter Kontaktbereich (70a, 70b), die durch einen signifikanten Abstand (74) beabstandet sind, an dem gleichen Schenkel (12, 14) vorgesehen sind, wenn sich der erste Schenkel (12) und der zweite Schenkel (14) an gegenüberliegenden Seiten (24, 26) des Flansches (16) befinden,
**dadurch gekennzeichnet, dass**
der Schenkel, der die wenigstens zwei Kontaktbereiche bereitstellt, gebogen ist, um einen nach außen weisenden Vorsprung zwischen den Kontaktbereichen derart vorzusehen, dass ein Freiraum für eine Leitung gebildet wird, wenn die Clip-Vorrichtung (10) mit dem Flansch (16) verbunden ist.

2. Vorrichtung nach Anspruch 1, **dadurch gekennzeichnet, dass** der Abstand (74, 76) daran angepasst ist, eine Torsionsbewegung der Clip-Vorrichtung (10) zu begrenzen.

3. Vorrichtung nach Anspruch 1 oder 2, **dadurch gekennzeichnet, dass** die Kontaktbereiche (70a, 70b) in einer Querrichtung und/oder in einer Längsrichtung bezüglich einer Außenkante (22) des Flansches (16) beabstandet vorgesehen sind.

4. Vorrichtung nach einem vorhergehenden Anspruch, **dadurch gekennzeichnet, dass** eine erste Feder (72a), die den ersten Kontaktbereich (70a) bereitstellt, durch einen der Schenkel (12, 14) gebildet ist und der zweite Kontaktbereich (70b) durch eine zweite Feder (72b, 72c, 72c) bereitgestellt wird, wobei vorzugsweise die zweite Feder (72b, 72c, 72d) in dem jeweiligen Schenkel (12, 14) gebildet ist.

5. Vorrichtung nach einem vorhergehenden Anspruch, **dadurch gekennzeichnet, dass** ein Endabschnitt (14a, 14d, 14e) des zweiten Schenkels mit einer Form und/oder einer Öffnung oder Aussparung zum Aufnehmen eines Kabelbinders (42) vorgesehen ist, um wenigstens eine Leitung (32) direkt an der Clip-Vorrichtung (10) zu befestigen.

6. Vorrichtung nach einem vorhergehenden Anspruch, **dadurch gekennzeichnet, dass** wenigstens eine Feder (72, 72a, 72b, 72c, 72d) in Kombination mit einem Kraftaufteilungselement (72e) vorgesehen ist, das zwei Kontaktbereiche (70a, 70b) bereitstellt, die auseinandergespreizt sind, um eine Kontaktkraft an dem Flansch (16) sicherzustellen.

7. Vorrichtung nach Anspruch 6, **dadurch gekennzeichnet, dass** die Kontaktbereiche (70c, 70d) des Kraftaufteilungselements (72e) in einer Querrichtung bezüglich einer Außenkante (22) des Flansches (16) ausgerichtet sind oder dass die Kontaktbereiche (70c, 70d) des Kraftaufteilungselements (72e) in einer Längsrichtung bezüglich einer Außenkante (22) des Flansches (16) ausgerichtet sind.

8. Vorrichtung nach einem vorhergehenden Anspruch, **dadurch gekennzeichnet, dass** wenigstens ein Kontaktbereich durch ein an dem Schenkel (12, 14) angebrachtes flexibles Kissen, vorzugsweise ein Gummikissen, bereitgestellt wird.

9. Vorrichtung nach einem vorhergehenden Anspruch, **dadurch gekennzeichnet, dass** der Schenkel (14), der für eine innere Oberfläche (26) des Flansches (16) vorgesehen ist, in einem Abstand (60) zu dem Steg (28) angeordnet ist.

10. Vorrichtung nach einem vorhergehenden Anspruch, **dadurch gekennzeichnet, dass** der erste Schenkel (12) eine Einrichtung (44) für einen Eingriff mit einer Übergangszone (46) zwischen dem Flansch (16) und einem weiteren Abschnitt (28) der Schwerfahrzeugrahmenschiene (18) aufweist, wobei vorzugsweise die Eingriffseinrichtung (44) für einen Eingriff mit der Übergangszone (46) zwischen dem Flansch (16) und dem weiteren Abschnitt angepasst ist, der ein Steg (28) der Schwerfahrzeugrahmenschiene (18) ist und/oder
- dass die Einrichtung (44) für einen Eingriff mit einer Übergangszone (46) nicht mehr als 75% der Übergangszone (46) abdeckt und/oder
- dass die Eingriffseinrichtung (44) einen gekrümmten Abschnitt (12a) des ersten Schenkels (12) umfasst, der dazu angepasst ist, mit einem entsprechenden gekrümmten Abschnitt der Übergangszone (46) in Eingriff zu kommen, und/oder
- dass die Eingriffseinrichtung (44) in einem freien Endabschnitt (12a) des ersten Schenkels (12) angeordnet ist.

11. Vorrichtung nach einem vorhergehenden Anspruch, **dadurch gekennzeichnet, dass** wenigstens ein Abschnitt einer Oberfläche des ersten Schenkels (12) einer Oberflächenbehandlung, unterzogen worden ist, um seinen Reibungskoeffizienten zu erhöhen, um, vorzugsweise durch Aufrauen der Oberfläche, die Reibung zwischen dem ersten Schenkel (12) und dem Flansch (16) zu erhöhen, und/oder
- dass die Vorrichtung (10) eine an dem ersten Schenkel (12) angeordnete Materialschicht zum Erhöhen der Reibung zwischen dem ersten Schenkel (12) und dem Flansch (16), vorzugsweise eine Schicht aus Gummi oder Kunststoff, umfasst.

12. Vorrichtung nach einem vorhergehenden Anspruch, **dadurch gekennzeichnet, dass** (A) der zweite Schenkel (14) einen freien Endabschnitt (14a) mit einer Erstreckung in einer Richtung aufweist, die im Wesentlichen parallel zu der Haupterstreckungsrichtung des ersten Schenkels (12) ist, wobei der Endabschnitt (14a) des zweiten Schenkels in die gleiche Richtung zu dem ersten Schenkel (12) weist, und/oder
- dass der zweite Schenkel (14) einen freien Endabschnitt (14d) mit einer Erstreckung in einer Richtung aufweist, die im Wesentlichen senkrecht zu der Haupterstreckungsrichtung des ersten Schenkels (12) ist, wobei der Endabschnitt (14d) des zweiten Schenkels von dem ersten Schenkel (12) weg weist, und/oder
- dass der zweite Schenkel (14) einen freien Endabschnitt (14e) mit einer Erstreckung in einer Richtung aufweist, die im Wesentlichen parallel zu der Haupterstreckungsrichtung des ersten Schenkels (12) ist, wobei der Endabschnitt (14e) des zweiten Schenkels in eine zu dem ersten Schenkel (12) entgegengesetzte Richtung weist, und/oder
- dass (B) das Aufhängungselement (30) eine Komponente (34) umfasst, die ein erstes Teil (36) einer Kopplungseinrichtung in Form eines Einschnappelements zur Verbindung mit einem entsprechenden zweiten Teil (38) einer Kopplungseinrichtung aufweist, vorzugsweise dass das Aufhängungselement (30) das zweite Teil (38) der Kopplungseinrichtung umfasst, wobei das zweite Teil (38) der Kopplungseinrichtung an einer Komponente (40) angeordnet ist, die mit einem Kabelbinder (42) zum Aufnehmen der wenigstens einen Leitung (32) versehen ist.

13. System zur Befestigung von Leitungen (32) an einem Schwerfahrzeugrahmen (18), umfassend eine Schwerfahrzeugrahmenschiene (18), die einen Steg (28) und einen Flansch (16) aufweist, und eine Clip-Vorrichtung (10) nach einem der Ansprüche 1 - 12, wobei die Clip-Vorrichtung (10) daran angepasst ist, an dem Flansch (16) derart angeordnet zu sein, dass sich im Wesentlichen der gesamte erste Schenkel (12) an der Flanschseite (52) einer geometrischen Ebene (54) befindet, die durch die Haupterstreckung einer äußeren Oberfläche (56) des Stegs (28) definiert ist.

14. System nach Anspruch 13, wobei (C) die effektive Länge (L) des ersten Schenkels (12) der Clip-Vorrichtung (10) an die Länge des Flansches (16) angepasst ist, um sicherzustellen, dass sich der erste Schenkel (12) an der Flanschseite (52) der geometrischen Ebene (54) befindet, und/oder
(D) die Form des ersten Schenkels (12) der Clip-Vorrichtung (10) an die Form des Flansches (16) angepasst ist, um sicherzustellen, dass sich der erste Schenkel (12) an der Flanschseite (52) der geometrischen Ebene (54) befindet, und/oder
(E) beabsichtigt ist, dass die geometrische Ebene (54) im Wesentlichen vertikal ist, wenn die Schwerfahrzeugrahmenschiene (18) in einem Schwerfahrzeug (30) installiert ist, und/oder
(F) dass die Form des ersten Schenkels (12) an die Form der Rahmenschiene (18) derart angepasst ist, dass entlang eines Großteils der Länge (L) des ersten Schenkels (12) der erste Schenkel (12) in Kontakt mit der Rahmenschiene (18) ist, wenn die Clip-Vorrichtung (10) an der Rahmenschiene (18) installiert ist, und/oder
(G) dass ein Großteil der Oberfläche des ersten Schenkels (12), die der Rahmenschiene (18) zugewandt ist, in Kontakt mit der Rahmenschiene (18) ist, wenn die Clip-Vorrichtung (10) an der Rahmenschiene (18) installiert ist, und/oder
(H) dass das System eine zwischen dem ersten Schenkel (12) und dem Flansch (16) angeordnete Materialschicht zum Erhöhen der Reibung zwischen der Schwerfahrzeugrahmenschiene (18) und der Clip-Vorrichtung (10) umfasst.

15. Schwerfahrzeug (100) umfassend eine Clip-Vorrichtung (10) nach einem der Ansprüche 1-12.

## Revendications

1. Dispositif d'agrafe (10) pour relier un ou plusieurs conduit(s) à un longeron de châssis (18) de véhicule lourd (100), comprenant une première branche (12) et une deuxième branche (14) pour serrer le dispositif sur une bride (16) d'un longeron de châssis de véhicule lourd (18), le dispositif d'agrafe (10) étant adapté pour être retenu au moyen d'une force de ressort interne du dispositif d'agrafe (10) lorsque la première branche (12) et la deuxième branche (14) sont situées sur des côtés opposés (24, 26) de la bride (16) et viennent en butée contre la bride (16) sous l'effet de ladite force de ressort interne, le dispositif d'agrafe (10) comprenant en outre un moyen (30) de suspension d'au moins un conduit (32), dans lequel
entre la bride (16) et au moins l'une des branches (12, 14) au moins des première et deuxième zones de contact (70a, 70b) espacées d'une distance significative (74) sont prévues au niveau de la même branche (12, 14) lorsque la première branche (12) et la deuxième branche (14) sont situées sur des côtés opposés (24, 26) de la bride (16), **caractérisé en ce que** la branche fournissant les au moins deux zones de contact est courbée pour fournir une protubérance pointant vers l'extérieur entre les zones de contact de manière à former un espace pour un conduit lorsque le dispositif d'agrafe (10) est relié à la bride (16).

2. Dispositif selon la revendication 1, **caractérisé en ce que** la distance (74, 76) est adaptée pour limiter un mouvement de torsion du dispositif d'agrafe (10).

3. Dispositif selon la revendication 1 ou 2, **caractérisé en ce que** les zones de contact (70a, 70b) sont prévues espacées dans une direction transversale et/ou dans une direction longitudinale par rapport à un bord externe (22) de la bride (16).

4. Dispositif selon l'une des revendications précédentes, **caractérisé en ce qu'**un premier ressort (72a) fournissant la première zone de contact (70a) est formé par l'une des branches (12, 14) et la deuxième zone de contact (70b) est prévue par un deuxième ressort (72b, 72c, 72d), où de préférence le deuxième ressort (72b, 72c, 72d) est formé dans la branche respective (12, 14).

5. Dispositif selon l'une des revendications précédentes, **caractérisé en ce que** la partie d'extrémité de deuxième branche (14a, 14d, 14e) est munie d'une forme et/ou d'une ouverture ou d'un évidement pour recevoir une attache à tête d'équerre (42) pour attacher directement au moins un conduit (32) au dispositif d'agrafe (10).

6. Dispositif selon l'une des revendications précédentes, **caractérisé en ce qu'**au moins un ressort (72, 72a, 72b, 72c, 72d) est prévu en combinaison avec un élément diviseur de force (72e) fournissant deux zones de contact (70a, 70b) séparées pour déterminer une force de contact sur la bride (16).

7. Dispositif selon la revendication 6, **caractérisé en ce que** les zones de contact (70c, 70d) de l'élément diviseur de force (72e) sont orientées dans une direction transversale par rapport à un bord externe (22) de la bride (16) ou **en ce que** les zones de contact (70c, 70d) de l'élément diviseur de force (72e) sont orientées dans une direction longitudinale par rapport à un bord externe (22) de la bride (16).

8. Dispositif selon l'une des revendications précédentes, **caractérisé en ce qu'**au moins une zone de contact est fournie par un coussin souple attaché à la branche (12, 14), de préférence un coussin en caoutchouc.

9. Dispositif selon l'une des revendications précédentes, **caractérisé en ce que** la branche (14) prévue pour une surface interne (26) de la bride (16) est agencée à une certaine distance (60) de la bande (28).

10. Dispositif selon l'une des revendications précédentes, **caractérisé en ce que** la première branche (12) a un moyen (44) d'engagement avec une zone de transition (46) entre la bride (16) et une autre partie (28) du longeron de châssis de véhicule lourd (18), où, de préférence, ledit moyen d'engagement (44) est adapté pour s'engager avec la zone de transition (46) entre la bride (16) et ladite autre partie étant une bande (28) du longeron de châssis de véhicule lourd (18) et/ou
- **en ce que** le moyen (44) d'engagement avec une zone de transition (46) ne couvre pas plus de 75% de la zone de transition (46) et/ou
- **en ce que** ledit moyen d'engagement (44) comprend une partie incurvée (12a) de la première branche (12) adaptée pour s'engager avec une partie incurvée correspondante de la zone de transition (46) et/ou
- **en ce que** ledit moyen d'engagement (44) est agencé dans une partie d'extrémité libre (12a) de la première branche (12).

11. Dispositif selon l'une des revendications précédentes, **caractérisé en ce qu'**au moins une partie d'une surface de la première branche (12) a été soumise à un traitement de surface pour augmenter le coefficient de frottement de celle-ci afin d'augmenter le frottement entre la première branche (12) et la bride (16), de préférence en rendant rugueuse ladite surface et/ou
- **en ce que** le dispositif (10) comprend une couche de matériau agencée sur la première branche (12) pour augmenter le frottement entre la première branche (12) et la bride (16), de préférence une couche de caoutchouc ou de plastique.

12. Dispositif selon l'une des revendications précédentes, **caractérisé en ce que** (A) la deuxième branche (14) a une partie d'extrémité libre (14a) avec une extension dans une direction sensiblement parallèle à la direction d'extension principale de la première branche (12), ladite partie d'extrémité de deuxième branche (14a) pointe dans la même direction que la première branche (12) et/ou
- **en ce que** la deuxième branche (14) a une partie d'extrémité libre (14d) avec une extension dans une direction sensiblement perpendiculaire à la direction d'extension principale de la première branche (12), ladite partie d'extrémité de deuxième branche (14d) s'éloigne de la première branche (12) et/ou
- **en ce que** la deuxième branche (14) a une partie d'extrémité libre (14e) avec une extension dans une direction sensiblement parallèle à la direction d'extension principale de la première branche (12), ladite partie d'extrémité de deuxième branche (14e) pointe dans une direction opposée à la première branche (12) et/ou
- **en ce que** (B) l'élément de suspension (30) comprend un composant (34) ayant une première partie (36) d'un raccord sous la forme d'un élément d'encliquetage pour une liaison à une deuxième partie correspondante (38) d'un raccord, de préférence **en ce que** l'élément de suspension (30) comprend ladite deuxième partie (38) du raccord, ladite deuxième partie (38) du raccord étant agencée sur un composant (40) muni d'une attache à tête d'équerre (42) pour recevoir ledit au moins un conduit (32).

13. Système de fixation de conduits (32) à un châssis de véhicule lourd (18), comprenant un longeron de châssis de véhicule lourd (18) ayant une bande (28) et une bride (16), et un dispositif d'agrafe (10) selon l'une des revendications 1 à 12, où le dispositif d'agrafe (10) est adapté pour être agencé sur la bride (16) de sorte que sensiblement toute la première branche (12) soit située du côté de bride (52) d'un plan géométrique (54) défini par l'extension principale d'une surface externe (56) de la bande (28).

14. Système selon la revendication 13, dans lequel (C) la longueur effective (L) de la première branche (12) du dispositif d'agrafe (10) est adaptée à la longueur de la bride (16) de manière à s'assurer que la première branche (12) est située du côté de la bride (52) dudit plan géométrique (54) et/ou
(D) la forme de la première branche (12) du dispositif d'agrafe (10) est adaptée à la forme de la bride (16) de manière à s'assurer que la première branche (12) est située du côté de la bride (52) dudit plan géométrique (54) et/ou
(E) le plan géométrique (54) est destiné à être sensiblement vertical lorsque le longeron de châssis de véhicule lourd (18) est installé dans un véhicule lourd (30) et/ou
(F) en ce que la forme de la première branche (12) est adaptée à la forme du longeron de châssis (18) de sorte que le long d'une majeure partie de la longueur (L) de la première branche (12), la première branche (12) est en contact avec le longeron de châssis (18) lorsque le dispositif d'agrafe (10) est installé sur le longeron de châssis (18) et/ou
(G) en ce qu'une majeure partie de la surface de la première branche (12) tournée vers le longeron de châssis (18) est en contact avec le longeron de châssis (18) lorsque le dispositif d'agrafe (10) est installé sur le longeron de châssis (18) et/ou
(H) en ce que le système comprend une couche de matériau agencée entre la première branche (12) et la bride (16) pour augmenter le frottement entre le longeron de châssis de véhicule lourd (18) et le dispositif d'agrafe (10).

15. Véhicule lourd (100) comprenant un dispositif d'agrafe (10) selon l'une des revendications 1 à 12.
